# EUROPEAN PATENT SPECIFICATION

(11) **EP 3 768 129 B1**
(45) Date of publication and mention of the grant of the patent: **06.07.2022**
(21) Application number: 19713215.2
(22) Date of filing: 28.02.2019
(51) Int. Cl.: A47J 31/44

(54) **APPARATUS FOR MAKING A BEVERAGE, COMPRISING AN IMAGE ACQUISITION DEVICE**
VORRICHTUNG ZUR HERSTELLUNG EINES GETRÄNKES MIT EINER BILDERFASSUNGSVORRICHTUNG
APPAREIL DE PRÉPARATION DE BOISSON COMPRENANT UN DISPOSITIF D'ACQUISITION D'IMAGE

(30) Priority: 22.03.2018 IT 201800003890
(43) Date of publication of application: 27.01.2021
(73) Proprietor: Caffitaly System S.P.A., 40041 Gaggio Montano (BO) (IT)
(72) Inventor: ACCURSI, Giovanni, 40046 Alto Reno Terme (Bologna) (IT); DIAMANTI, Maurizio, 40030 Castel di Casio Bologna (IT)
(74) Representative: Ponchiroli, Simone
(86) International application number: PCT/IB2019/051619
(87) International publication number: WO 2019/180522

(56) References cited:
- EP-A1- 3 028 608
- EP-A1- 3 095 361

## Description

This invention relates to the sector of apparatuses for making beverages. In particular, this invention relates to an apparatus for making a beverage which uses a capsule containing a food substance, the apparatus comprising an image acquisition device for acquiring at least one image of a portion of the capsule to be used.

At present there are many prior art types of apparatuses capable of making beverages, which, in general, comprise an infusion unit in which an infusion chamber is made, into which, in use, a capsule containing a food substance can be inserted.

The infusion unit in turn comprises a first part and a second part which are movable, at least one relative to the other, between a home position, in which they are at a distance from each other and in which the infusion chamber is open for allowing the capsule to be positioned in it, and an infusion position, in which the two parts are coupled to each other and close the infusion chamber.

There are also beverage making means for making water (in particular, hot and pressurized water) circulate through the capsule contained in the closed infusion chamber, thereby causing the beverage to be made, and for supplying the beverage to the outside of the apparatus.

In the sector there are prior art apparatuses capable of detecting the type of capsule fed to the apparatus; based on the type of capsule detected, the apparatus adopts the infusion and supplying parameters (such as temperature and pressure of the water fed to the capsule) best suited to the type of capsule.

One particular technology currently used for that purpose involves an optical recognition of the capsule by means of an image acquisition device which is positioned upstream of the infusion chamber or in the infusion chamber. The image acquisition device is suitable for reading a bar code or a QR-code or another recognisable code which is present on the capsule.

However, the prior art solutions for this technology have several disadvantages.

In particular, the image acquisition device is positioned in a part of the apparatus in which water vapour or moist air may be present, coming from the infusion chamber and/or from a collection drawer for used capsules. In contact with a cold surface, the water in the gaseous phase may cause water condensation and misting over of that surface. That occurs, in particular, on a viewing window, made of transparent material, which separates the optical sensor of the image acquisition device from the region in which the capsule to be recognised passes. This disadvantage is greater the lower the temperature of the environment is.

Water condensation and misting over of the viewing window of the image acquisition device may interfere with or even prevent operation of the device itself and result in more or less serious reading errors.

Therefore, it is necessary to hinder the formation of water condensation or misting over which may interfere with correct operation of the image acquisition device.

In some prior art solutions there is a fan for creating a forced airflow on the viewing window (such as in EP 3 028 608 A1, which discloses the preamble of claim 1), or the viewing window is positioned in such a way that it is easily accessible and cleanable by a user. However, the prior art solutions are not completely satisfactory and effective, as well as involving technical complications, additional costs or the need for manual intervention by the user.

In this context the technical purpose which forms the basis of this invention is to provide an apparatus for making a beverage that overcomes, or at least reduces, the above-mentioned disadvantages or that offers an alternative solution to the prior art solutions.

The technical purpose specified and the aims indicated are substantially achieved by an apparatus for making a beverage according to claim 1. Particular embodiments of this invention are defined in the corresponding dependent claims.

According to one aspect of this invention, the apparatus for making a beverage comprises a heating device which is positioned in a first region of the apparatus, whilst the viewing window of the image acquisition device is positioned in a second region of the apparatus. The first region is at a height that is lower than the second region and the two regions are in communication with each other, for example through a channel which joins them, thereby allowing an airflow from the first region to the second region. During use, the heating device heats air in the first region and the heated air flows into the second region, where the heated air can make contact with the viewing window.

That is useful for heating the viewing window, in order to prevent or in any case reduce the formation of water condensation on it, in a simple way which does not require special devices to be positioned near the viewing window itself. It is also useful for creating ventilation of the second region, therefore preventing any stagnation of moist air in it. In particular, the flow of heated air from the first region to the second region is a natural ventilation which occurs due to a stack effect, thereby avoiding the need for a mechanical fan.

Essentially, the heated air which flows in the second region enables the formation of water condensation or misting over on the viewing window to be hindered or prevented.

In one embodiment, the heating device is or comprises a heater for heating water for making the beverage. In this case, there is no need to equip the apparatus with a special heating device for heating the air, instead the heater already provided for infusion can be used. In use, the thermal energy for heating the air is a by-product of heating the infusion air. This solution is advantageous because it does not add to the cost of the apparatus. Moreover, since the heating of the heater during use occurs before moist air responsible for misting over can form, the viewing window is heated in advance and therefore the formation of water condensation on it is prevented.

Even more specifically, the heater comprises an outer casing, or shell, which is at least partly in the first region and which heats up during use of the heater, so that the heating device heats air in the first region by means of heat exchange between the outer shell and the air. This solution is advantageous because it does not require any substantial change to the heaters already usable in prior art apparatuses.

In one embodiment, the image acquisition device comprises a box-shaped casing which encloses an inner chamber in which the optical sensor is housed. The viewing window is a part of the box-shaped casing and the heating device (in particular, the above-mentioned heater) is positioned below the box-shaped casing. That is useful for optimising the layout of the components and for minimising the path of the heated air between the heating device and the viewing window.

For example, between a bottom wall of the box-shaped casing and the heating device there is an air passage channel which puts the first region in communication with the second region. Specifically, that air passage channel is formed between the outer shell of the heater and the bottom wall of the box-shaped casing. The flow of heated air from the first region to the second region occurs in the air passage channel.

In one embodiment, the first region, in which the heating device is located, is in communication with the environment outside the apparatus by means of at least one opening or slit in an outer casing or shell of the apparatus. That is useful for allowing air to enter from the outside into the first region, that air being intended to be heated by the heating device and to pass in the second region. The entry of air from the outside is useful in particular because, compared with the air already present inside the apparatus, the external air is drier because it has not received the vapours generated in the apparatus, for example vapours which may come from the infusion chamber or from a chamber for collecting used capsules.

Further features and advantages of this invention are more apparent in the detailed description below, with reference to a preferred, non-limiting embodiment of an apparatus for making a beverage, comprising an image acquisition device. Reference will be made to the accompanying drawings, in which:
- Figure 1 is a perspective view of an apparatus for making a beverage according to this invention;
- Figure 2 is a perspective, longitudinal sectional view of the apparatus of Figure 1;
- Figure 3 is a perspective view of an internal unit of the apparatus of Figure 1, that internal unit being shown on its own and extracted from the apparatus;
- Figure 4 is a longitudinal sectional view of the internal unit of Figure 3;
- Figure 5 is an enlarged detail of the longitudinal sectional view of Figure 4;
- Figure 6 is a perspective, longitudinal sectional view of an enlarged detail of the internal unit of Figure 3.

In the figures referred to, an apparatus for making a beverage, according to this invention, has been labelled 1 in its entirety. For making a beverage, the apparatus 1 uses a capsule (not shown), in particular a disposable capsule, which contains a food substance, for example coffee powder.

The apparatus 1 is schematically illustrated and in particular several details relating to known aspects which are not relevant for understanding this invention have been omitted from the figures.

The apparatus 1 has a shell 10, or outer casing, which encloses and protects the internal components of the apparatus 1 itself; the internal components are described below.

First, the apparatus 1 comprises an infusion unit 2 in which an infusion chamber 21, which is suitable for receiving the capsule containing the food substance, is made.

Associated with the infusion chamber 21 there are beverage making means, which are not illustrated in detail in the figures, since they can be made according to known methods and are not directly linked to the innovative aspects of this invention. In use, the beverage making means are suitable for making water (in particular hot water) circulate through the capsule contained in the closed infusion chamber 21, thereby causing the beverage to be made, and for supplying the beverage made to the outside of the apparatus 1.

The beverage making means comprise a heater 22 for heating the water, a feeding circuit for feeding water (which is or is not pressurised) to the infusion chamber 21, and a supplying duct for supplying the beverage made to the outside. For example, the heater 22 comprises an electric resistor which heats the water by means of Joule heating effect.

The water to be heated is taken from a tank 13 and the water feeding circuit comprises a pump.

The beverage making means may also comprise first piercing means 23 for making a first hole in the capsule, through which to feed the water into the capsule, and second piercing means 24 for making a second hole through which to enable the beverage to come out of the capsule.

Since the details of the beverage making means are not part of the innovative aspects of this invention and are in themselves similar to the prior art ones, they are only briefly described herein.

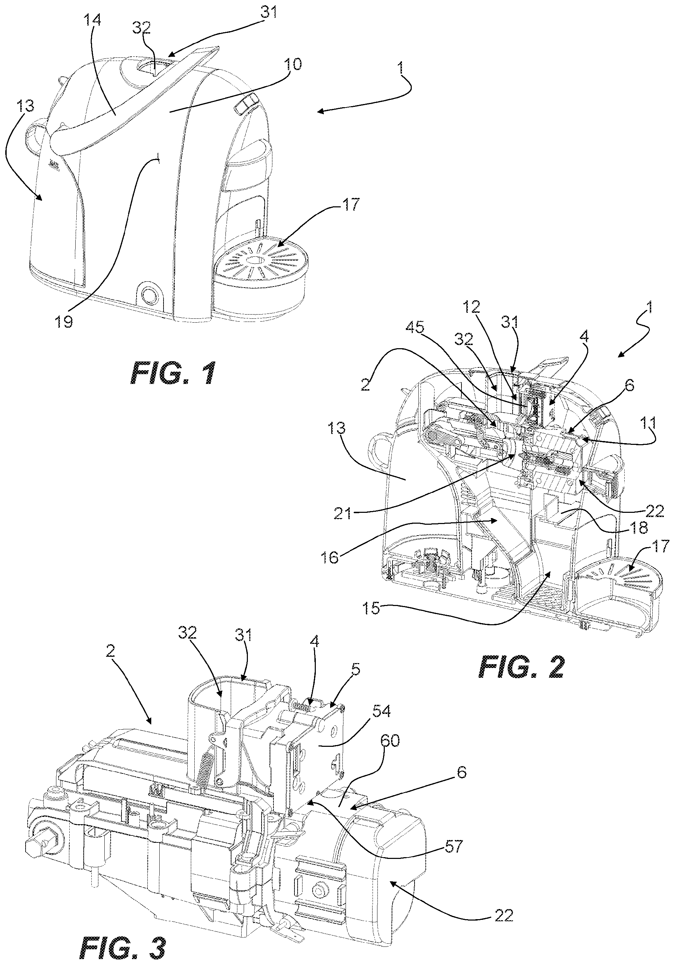

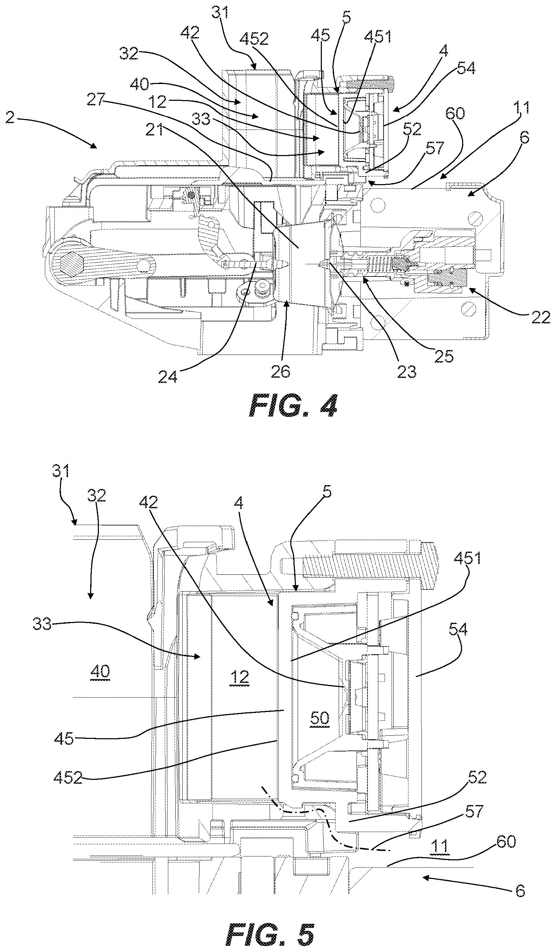

The infusion unit 2 comprises a first part 25 and a second part 26 which are movable, at least one relative to the other, between a home position, in which the infusion chamber 21 is open, and an infusion position, in which the infusion chamber 21 is closed. When they are in the home position, the first part 25 and the second part 26 of the infusion unit 2 are far enough apart to allow a capsule to be inserted into the infusion chamber 21, whilst when they are in the infusion position (shown in Figures 2 and 4), the first part 25 and the second part 26 are coupled together so that they close the capsule in the infusion chamber 21. The movement of the first part 25 and the second part 26 between the home position and the infusion position, and vice versa, is driven manually by a user by means of a lever 14 which pivots at the frame of the apparatus 1. These aspects are in themselves already known and are not described in further detail.

In the embodiment shown in the figures, the infusion unit 2 is of the horizontal type: the first part 25 and the second part 26 are movable one relative to the other with a horizontal line of movement parallel to a central axis defined by the infusion chamber 21. Moreover, the infusion chamber 21 is advantageously made substantially entirely in only one of either the first part 25 or the second part 26 (specifically, in the second part 26), whilst the other part acts only as a closing element of the infusion chamber 21. Specifically, the capsule positioned in the infusion chamber 21 has its central axis substantially horizontal and coinciding with the central axis of the infusion chamber 21.

For the positioning of the capsule, the apparatus 1 comprises an insertion opening 31 and a transfer channel 32 which connects the insertion opening 31 to the infusion chamber 21. After having been inserted in the apparatus 1 through the insertion opening 31, the capsule travels along the transfer channel 32 until it reaches a receiving seat between the first part 25 and the second part 26 of the infusion unit 2 in the home position.

In particular, the insertion opening 31 is a mouth at the top of the transfer channel 32 and faces upwards. As shown in the figures, the insertion opening 31 is located in the top region of the shell 10.

The transfer channel 32 extends substantially from the top down (vertically or, if necessary, obliquely) and the capsule moves in it thanks to the force of gravity, falling downwards. If necessary, the transfer channel 32 may be equipped with two guiding grooves (not shown) which are located on opposite sides of the transfer channel 32 and extend parallel to the length of the transfer channel 32. The guiding grooves, receiving opposite portions of an annular flange projecting at the top of the capsule, have the function of guiding the capsule as it falls along the transfer channel 32 and preventing the capsule from rotating on itself as it falls.

When the first part 25 and the second part 26 of the infusion unit 2 are in the home position, the bottom of the transfer channel 32 opens onto the receiving seat which is formed by the space interposed between the first part 25 and the second part 26. When the first part 25 and the second part 26 of the infusion unit 2 are in the infusion position, the bottom of the transfer channel 32 is closed by a movable wall 27 which moves with the second part 26.

The apparatus 1 may also comprise retaining means for the capsule (which can be made in the known way), for retaining the capsule in a standby position when the first part 25 and the second part 26 are in the home position and during at least one stretch of their shifting towards the infusion position, and capsule ejecting means (which can also be made in the known way) which cause the ejection of the capsule from the infusion chamber 21 at the end of beverage supplying, during the return of the first part 25 and the second part 26 towards the home position.

The apparatus 1 also comprises a collection chamber 15 for used capsules: following ejection from the infusion chamber 21 after use, the capsule falls into the collection chamber 15. The collection chamber 15 is located below the infusion chamber 21, substantially on the bottom of the apparatus 1, and is connected to the infusion chamber 21 by a fall channel 16. The collection chamber 15 is in communication, through the infusion chamber 21, with the capsule transfer channel 32.

The connection chamber 15 is part, for example, of a drawer which, being extractable from the main body of the apparatus 1, allows regular removal and elimination of used capsules. In particular, the extractable drawer also comprises a support 17 for a cup intended to receive the beverage supplied by the apparatus 1.

The apparatus 1 comprises an image acquisition device 4 which is intended to acquire at least one image of a portion of the capsule. Specifically, the image acquisition device 4 is used for acquiring one or more images of at least one identification portion of the capsule, that is to say, a portion on which a bar code or another graphical element, which is in itself visible and recognisable, is present. For example, that graphical element is constituted of a word or figurative mark, preferably registered, thus allowing an indication to the consumer that the capsule in question is compatible with the apparatus 1 and is approved by the manufacturer of the apparatus 1.

In particular, the image acquisition device 4 is associated with the transfer channel 32 and, in use, acquires at least one image of a portion of the capsule before the latter reaches the infusion chamber 21. In fact, the image acquisition device 4 is positioned along the capsule feeding path, outside the infusion chamber 21. Therefore, the image acquisition device 4 is configured to acquire one or more images of the capsule when the latter is at an image capture zone 40 in which, in use, the capsule is located or passes. Specifically, the image capture zone 40 is a stretch of the transfer channel 32.

First, the image acquisition device 4 comprises at least one optical sensor 42 facing towards the image capture zone 40. The optical sensor 42 is for example a sensor with CMOS technology and in particular operates at least in the visible light spectrum. The image acquisition device 4 also comprises at least one light emitting element for, in use, lighting the image capture zone 40 and the capsule in it. The at least one light emitting element is for example constituted of one or more LEDs which produce white light.

The apparatus 1 comprises a viewing window 45, made of transparent material (for example polymethyl methacrylate), which is interposed between the optical sensor 42 and the image capture zone 40. The viewing window 45 has a first face 451 which is facing towards the optical sensor 42 and a second face 452 which is facing towards the image capture zone 40.

For example the viewing window 45 is a wall which separates the optical sensor 42 from the image capture zone 40 in the transfer channel 32, for protecting the optical sensor 42 from dirt or vapours coming from the transfer channel 32 itself. During use, the optical sensor 42 sees the capsule in the image capture zone 40 through the viewing window 45.

In particular, the image acquisition device 4 comprises a box-shaped casing 5, which encloses an inner chamber 50 in which the optical sensor 42 is housed. The viewing window 45 is a part of the box-shaped casing 5, being a front wall of the latter.

The box-shaped casing 5 also comprises lateral walls, including a bottom wall 52, which are connected to the front wall and laterally delimit the inner chamber 50. If necessary, the front wall and the lateral walls are made in one piece. The box-shaped casing 5 may also comprise a rear wall 54 which is on the opposite side to the front wall and is therefore further from the image capture zone 40. That rear wall 54 may be a separate piece, for example a panel fixed to the lateral walls, which closes the back of the inner chamber 50. The optical sensor 42, the light emitting element and any other electronic components of the image acquisition device 4 may be supported by the rear wall 54.

In order to prevent moisture or dirt from being able to penetrate the inner chamber 50, the box-shaped casing 5 is substantially hermetically sealed. The apparatus 1 comprises an electronic processing unit, suitable for managing the image acquisition device 4 and for processing the images obtained from the optical sensor 42.

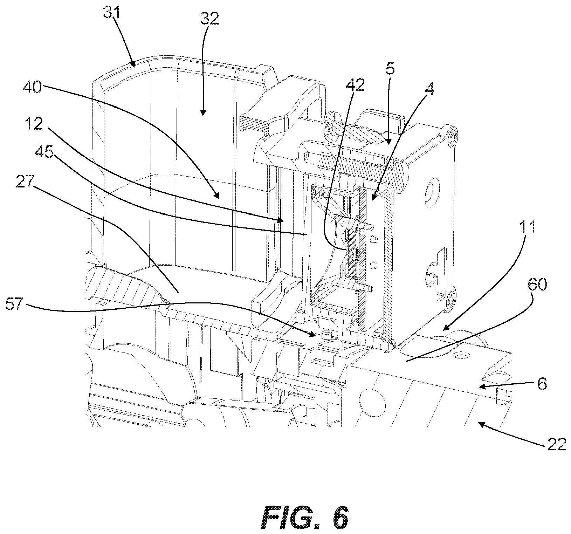

In the embodiment illustrated, the image acquisition device 4 is positioned in a lateral seat 33 relative to the transfer channel 32. As shown in Figures 4 to 6, the viewing window 45 is at a distance from the transfer channel 32 and is in a back position in the lateral seat 33. Thanks to this aspect, the viewing window 45 is not directly struck by the moist air or water vapour rising in the transfer channel 32 from the infusion chamber 21 and/or from the collection chamber 15 for used capsules.

However, this aspect can in itself be not enough to prevent the formation of water condensation and misting over on the viewing window 45. In order to prevent or at least reduce this disadvantage, an apparatus 1 according to this invention is configured to produce heated air ventilation in the region where the viewing window 45 is located, as described below.

The apparatus 1 comprises a heating device 6, which is positioned in a first region 11 of the apparatus 1 and is suitable for heating air located in the first region 11, such as the air which is around the heating device 6. In practice, the first region 11 is, or is part of, a first chamber of the apparatus 1. The heating device 6 is located in that first chamber and the air in the first chamber is in contact with the heating device 6, so that during use of the apparatus 1 there is a heat transfer from the heating device to the air.

The viewing window 45 is positioned in a second region 12 of the apparatus 1, in particular in said lateral seat 33 relative to the transfer channel 32. In practice, the second region 12 is, or is part of, a second chamber of the apparatus 1; the viewing window 45 is positioned on, or is facing, the second chamber; the air in the second chamber is in contact with at least one of the faces 451, 452 of the viewing window 45.

The first region 11 and the second region 12 are in communication with each other, through an opening, a passage, a channel or a duct. Therefore, an airflow is allowed from the first region 11 to the second region 12.

Moreover the first region 11 is at a height which is lower than the second region 12. Relative to a horizontal supporting surface on which the apparatus 1 rests during normal use, the first region 11 is at a distance from that supporting surface which is less than the distance of the second region 12 from the same supporting surface. In practice, the air in the first region 11 receives heat from the heating device 6 at a height lower than the height at which the air in the second region 12 is in contact with the viewing window 45. In particular, the heating device 6 is positioned at a height lower than the height at which the viewing window 45 is located.

During use of the apparatus 1, the heating device 6 heats air in the first region 11 and, thanks to the communication between the two regions 11, 12 and their relative arrangement at different heights, the heated air passes into the second region 12, where the heated air can make contact with the first face 451 and/or the second face 452 of the viewing window 45. Consequently the viewing window 45 is heated by the heated air, which therefore makes any already-formed water condensation evaporate and prevents the formation of more water condensation on the viewing window 45, thanks to the heating of the viewing window 45 itself. Moreover the flow of heated air creates ventilation which carries away the moist air near the viewing window 45, thereby lowering the dew point.

An apparatus 1 according to this invention is therefore useful for improving operation of the image acquisition device 4, preventing the latter from being troubled by misting over of the viewing window 45 due to water condensation.

Specifically, the heated air is made to flow from the first region 11 to the second region 12 by a natural ventilation that occurs due to a stack effect. The configuration of the apparatus 1 is such that the heated air in the first region 11 tends to spontaneously pass into the second region 12. In fact, since the air is heated in the first region 11 which is at a lower height than the second region 12 with which it is in communication, the lower density of the heated air causes it to rise and go into the second region 12.

The natural ventilation is further promoted by the fact that, as in the embodiment illustrated, the second region 12 is in communication with the capsule transfer channel 32 (or even the second region 12 is part of the capsule transfer channel 32). Therefore, in use the heated air can make contact with the second face 452 of the viewing window 45 and can go into the capsule transfer channel 32 until it comes out through the insertion opening 31. In practice the transfer channel 32 constitutes an outlet chimney for the air heated in the first region 11, whilst the second region 12 is interposed between the first region 11 and the outlet chimney.

Specifically, as shown in the figures, the second region 12 is between the viewing window 45 and the transfer channel 32.

In an alternative embodiment, although less advantageous, the heated air can make contact with the first face 451 of the viewing window 45 (that is to say, the face facing towards the optical sensor 42); the second face 451 can be heated by thermal conduction through the viewing window 45.

In the embodiment illustrated, as already described above, the viewing window 45 is part of a box-shaped casing 5 which encloses the inner chamber 50 containing the optical sensor 42.

In particular, the heating device 6 is positioned below the box-shaped casing 5.

Moreover an air passage channel 57, which puts in communication the first region 11 and the second region 12, is between the bottom wall 52 of the box-shaped casing 5 and the heating device 6. The path of the channel 57 is illustrated with a dash - dot line in Figure 5. The bottom wall 52 of the box-shaped casing 5 is at a distance from the heating device 6 and in the space between them the channel 57 is defined, which on one side opens onto the first region 11 (above the heating device 6) and on the other side opens onto the second region 12 (just below the viewing window 45). The flow of heated air from the first region 11 to the second region 12 is in said channel 57. The first region 11 communicates with the environment outside the apparatus 1 by means of at least one opening or slit 19 in the outer shell or casing 10 of the apparatus 1. Therefore, the heated air which passes into the second region 12 is replaced by air from outside which enters the first region 11 through said opening or slit 19. That is useful for preventing the heated air from being replaced by air from inside the apparatus 1 which could be damper than the air from outside and therefore, when in turn heated, could be less effective against misting over of the viewing window 45. Specifically, the opening or slit 19 is at the first region 11, onto which it opens directly.

In an alternative embodiment, the opening or slit 19 is not present and the air from outside enters the first region 11 through passages which are not sealed airtight and remain in the contact zones between the various parts of which the outer shell or casing 10 is composed. It should be noticed that the flow of heated air which passes between the first region 11 and the second region 12 is relatively small, as is the required flow of air from outside.

In the embodiment illustrated, the apparatus 1 also comprises at least one partition wall 18 which separates the collection chamber 15 from the first region 11. That is useful for preventing moist air rising from the used capsules from reaching the first region 11 and, from there, the second region 12.

In the embodiment illustrated, the heating device 6 is or comprises the heater 22 for heating the water intended for the infusion chamber 21. In practice, preparation of the hot water for infusion is the main function of the heater 22, which as a secondary effect also heats the air in the first region 11. That is useful for obtaining a further advantage (that is to say, preventing misting over of the viewing window) without the need to provide an additional special device.

Since the heater 22 is activated before making the beverage, heating takes place before moist air can be released by the infusion chamber or by the used capsules and, therefore, misting over of the viewing window 45 is prevented right from the start of operation of the apparatus 1.

In particular, the heater 22 comprises an outer shell (or casing) 60 which is at least partly in the first region 11 and which heats up during use of the heater 22, so that the heating device 6 heats air in the first region 11 by means of heat exchange between the outer shell 60 and the air. In practice, that enables good use to be made of the heat which would be lost by the heater 22 through its shell.

Moreover, as shown in the figures, the outer shell 60 of the heater 22 is at a distance from the bottom wall 52 of the box-shaped casing 5 of the image acquisition device 4, therefore the air passage channel 57 is formed between the outer shell 60 and the bottom wall 52.

For more details about the known aspects of the apparatus 1, see for example what is described in patent applications WO 2015/019248 A1, WO 2015/019249 A1 and WO 2017/134544 A1 in the name of the same Applicant.

The invention described above may be modified and adapted in several ways without thereby departing from the scope of the appended claims.

## Claims

1. An apparatus (1) for making a beverage, comprising:
- an infusion chamber (21) suitable for receiving a capsule containing a food substance for making a beverage;
- an insertion opening (31) for inserting the capsule into the apparatus (1);
- a transfer channel (32) for the capsule, which connects the insertion opening (31) to the infusion chamber (21);
- an image acquisition device (4) intended, in use, to acquire at least one image of a portion of the capsule, the image acquisition device (4) including an optical sensor (42) facing towards an image capture zone (40) in which, in use, said capsule is located or passes, the image capture zone (40) being a stretch of the transfer channel (32);
- a viewing window (45), made of transparent material, which is interposed between the optical sensor (42) and the image capture zone (40), the viewing window (45) having a first face (451) facing towards the optical sensor (42) and a second face (452) facing towards the image capture zone (40);
- a heating device (6, 22);
wherein the heating device (6, 22) is positioned in a first region (11) of the apparatus (1) and the viewing window (45) is positioned in a second region (12) of the apparatus (1), the first region (11) being at a height that is lower than the second region (12);
wherein the first region (11) and the second region (12) are in communication with each other, thereby allowing an airflow from the first region (11) to the second region (12);
**characterised in that** the apparatus (1) is configured in such a way that, in use, the heating device (6, 22) heats air in the first region (11) and the heated air flows into the second region (12), where the heated air can make contact with the first face (451) and/or the second face (452) of the viewing window (45) and heat the viewing window (45).

2. The apparatus (1) for making a beverage according to claim 1, wherein, in use, a natural ventilation that occurs due to a stack effect makes the heated air flow from the first region (11) to the second region (12).

3. The apparatus (1) for making a beverage according to claim 1 or 2, wherein the heating device (6, 22) is or comprises a heater (22) for heating water for making the beverage.

4. The apparatus (1) for making a beverage according to claim 3, wherein the heater (22) comprises an outer shell (60) which is at least partly in the first region (11) and which heats up during use of the heater (22), so that the heating device (6, 22) heats air in the first region (11) by means of heat exchange between the outer shell (60) and the air.

5. The apparatus (1) for making a beverage according to any of claims 1 to 4, wherein the image acquisition device (4) is positioned in a lateral seat (33) relative to the transfer channel (32) and wherein the viewing window (45) is at a distance from the transfer channel (32), the viewing window (45) being in a back position in the lateral seat (33),
the second region (12) being between the viewing window (45) and the transfer channel (32), so that, in use, the heated air can make contact with the second face (452) of the viewing window (45).

6. The apparatus (1) for making a beverage according to any of claims 1 to 5, wherein the second region (12) is in communication with the transfer channel (32) or wherein the second region (12) is part of the transfer channel (32), so that, in use, the heated air can make contact with the second face (452) of the viewing window (45) and can go into the transfer channel (32) until it comes out through the insertion opening (31).

7. The apparatus (1) for making a beverage according to any of claims 1 to 6, wherein the image acquisition device (4) comprises a box-shaped casing (5) which encloses an inner chamber (50) in which the optical sensor (42) is housed, the viewing window (45) being a part of the box-shaped casing (5), wherein the heating device (6, 22) is positioned below the box-shaped casing (5).

8. The apparatus (1) for making a beverage according to claim 7, wherein an air passage channel (57) is between a bottom wall (52) of the box-shaped casing (5) and the heating device (6, 22), the air passage channel (57) putting the first region (11) in communication with the second region (12), the flow of heated air from the first region (11) to the second region (12) being in the air passage channel (57).

9. The apparatus (1) for making a beverage according to claim 8 in combination with claim 4, wherein the air passage channel (57) is formed between the outer shell (60) of the heater (22) and the bottom wall (52) of the box-shaped casing (5).

10. The apparatus (1) for making a beverage according to any of claims 1 to 9, comprising a collection chamber (15) for used capsules, said collection chamber (15) being below the infusion chamber (21) and being in communication, through the infusion chamber (21), with the transfer channel (32),
the apparatus (1) comprising at least one partition wall (18) which separates the collection chamber (15) from the first region (11),
the first region (11) being in communication with the environment outside the apparatus (1) by means of at least one opening or slit (19) in an outer shell (10) of the apparatus (1).

## Patentansprüche

1. Eine Vorrichtung (1) zur Zubereitung eines Getränks, Folgendes beinhaltend:
- eine Infusionskammer (12), die sich dazu eignet, eine Kapsel zu empfangen, die eine Lebensmittelsubstanz enthält, um ein Getränk zuzubereiten;
- eine Einführöffnung (31), um die Kapsel in die Vorrichtung (1) einzusetzen;
- einen Übertragungskanal (32) für die Kapsel, der die Einführöffnung (31) mit der Infusionskammer (21) verbindet;
- eine Bilderfassungsvorrichtung (4), die dafür bestimmt ist, im Gebrauch mindestens ein Bild eines Abschnitts der Kapsel zu erfassen, die Bilderfassungsvorrichtung (4) beinhaltet dabei einen optischen Sensor (42), der zu einem Bilderfassungsbereich (40) gerichtet ist, in dem sich besagte Kapsel im Gebrauch befindet oder den sie durchläuft, der Bilderfassungsbereich (40) ist dabei ein Streckenabschnitt des Übertragungskanals (32);
- ein Sichtfenster (45), aus transparentem Material bestehend, das zwischen dem optischen Sensor (42) und dem Bilderfassungsbereich (40) eingesetzt ist, das Sichtfenster (45) hat dabei eine erste Seite (451), die zu dem optischen Sensor (42) gerichtet ist, und eine zweite Seite (452), die zum Bilderfassungsbereich (40) gerichtet ist;
- eine Heizvorrichtung (6, 22);
wobei die Heizvorrichtung (6, 22) in einem ersten Bereich (11) der Vorrichtung (1) positioniert ist und das Sichtfenster (45) in einem zweiten Bereich (12) der Vorrichtung (1) positioniert ist, der erste Bereich (11) ist dabei in einer Höhe, die niedriger als der zweite Bereich (12) ist;
wobei der erste Bereich (11) und der zweite Bereich (12) miteinander in Verbindung stehen, dadurch einen Luftstrom vom ersten Bereich (11) zum zweiten Bereich (12) erlaubend;
**dadurch gekennzeichnet, dass** die Vorrichtung (1) solcherart gestaltet ist, dass die Heizvorrichtung (6, 22) im Gebrauch Luft im ersten Bereich (11) erhitzt und die erhitzte Luft in den zweiten Bereich (12) strömt, wo die erhitzte Luft mit der ersten Seite (451) und/oder der zweiten Seite (452) des Sichtfensters (45) in Berührung treten und das Sichtfenster (45) aufheizen kann.

2. Die Vorrichtung (1) zur Zubereitung eines Getränks nach dem Patentanspruch 1, wobei im Gebrauch eine natürliche Lüftung, die aufgrund eines Kamineffekts auftritt, dafür sorgt, dass die erhitzte Luft vom ersten Bereich (11) in den zweiten Bereich (12) strömt.

3. Die Vorrichtung (1) zur Zubereitung eines Getränks nach dem Patentanspruch 1 oder 2, wobei die Heizvorrichtung (6, 22) eine Heizung (22) zum Erhitzen von Wasser zur Zubereitung des Getränks ist oder beinhaltet.

4. Die Vorrichtung (1) zur Zubereitung eines Getränks nach dem Patentanspruch 3, wobei die Heizung (22) eine Außenhülle (60) beinhaltet, die zumindest teilweise im ersten Bereich (11) ist und die sich beim Gebrauch der Heizung (22) aufheizt, sodass die Heizvorrichtung (6, 22) Luft im ersten Bereich (11) durch den Wärmeaustausch zwischen der Außenhülle (60) und der Luft erhitzt.

5. Die Vorrichtung (1) zur Zubereitung eines Getränks nach jedem der Patentansprüche 1 bis 4, wobei die Bilderfassungsvorrichtung (4) in einem seitlichen Sitz (33) im Verhältnis zum Übertragungskanal (32) positioniert ist und wobei das Sichtfenster (45) in einem Abstand vom Übertragungskanal (32) ist, das Sichtfenster (45) ist dabei ein einer hinteren Position im seitlichen Sitz (33),
der zweite Bereich (12) ist dabei zwischen dem Sichtfenster (45) und dem Übertragungskanal (32), sodass die erhitzte Luft im Gebrauch mit der zweiten Seite (452) des Sichtfensters (45) in Kontakt treten kann.

6. Die Vorrichtung (1) zur Zubereitung eines Getränks nach jedem der Patentansprüche 1 bis 5, wobei der zweite Bereich (12) in Verbindung mit dem Übertragungskanal (32) steht oder wobei der zweite Bereich (12) Teil des Übertragungskanals (32) ist, sodass die erhitzte Luft im Gebrauch mit der zweiten Seite (452) des Sichtfensters (45) in Kontakt treten kann und in den Übertragungskanal (32) strömen kann, bis sie aus der Einführöffnung (31) hinausströmt.

7. Die Vorrichtung (1) zur Zubereitung eines Getränks nach jedem der Patentansprüche 1 bis 6, wobei die Bilderfassungsvorrichtung (4) ein kastenförmiges Gehäuse (5) beinhaltet, das eine Innenkammer (50) umschließt, in der der optische Sensor (42) untergebracht ist, das Sichtfenster (45) ist dabei Teil des kastenförmigen Gehäuses (5), wobei die Heizvorrichtung (6, 22) unter dem kastenförmigen Gehäuse (5) positioniert ist.

8. Die Vorrichtung (1) zur Zubereitung eines Getränks nach dem Patentanspruch 7, wobei ein Luftdurchflusskanal (57) zwischen einer Bodenwand (52) des kastenförmigen Gehäuses (5) und der Heizvorrichtung (6, 22) ist, der Luftdurchflusskanal (57) setzt dabei den ersten Bereich (11) in Verbindung mit dem zweiten Bereich (12), der Strom erhitzter Luft vom ersten Bereich (11) zum zweiten Bereich (12) ist dabei der Luftdurchflusskanal (57).

9. Die Vorrichtung (1) zur Zubereitung eines Getränks nach dem Patentanspruch 8 in Kombination mit dem Patentanspruch 4, wobei der Luftdurchflusskanal (57) zwischen der Außenhülle (60) der Heizung (22) und der Bodenwand (52) des kastenförmigen Gehäuses (5) gebildet ist.

10. Die Vorrichtung (1) zur Zubereitung eines Getränks nach jedem der Patentansprüche 1 bis 9, eine Sammelkammer (15) für gebrauchte Kapseln beinhaltend, besagte Sammelkammer (15) ist dabei unter der Infusionskammer (21) und steht dabei, durch die Infusionskammer (21) hindurch, in Verbindung mit dem Übertragungskanal (32),
die Vorrichtung (1) beinhaltet dabei mindestens eine Trennwand (18), die die Sammelkammer (15) vom ersten Bereich (11) trennt,
der erste Bereich (11) steht dabei in Verbindung mit der Umgebung außerhalb der Vorrichtung (1) durch mindestens eine Öffnung oder mindestens einen Schlitz (19) in einer Außenhülle (10) der Vorrichtung (1).

## Revendications

1. Un appareil (1) pour la préparation d'une boisson, comprenant :
- une chambre d'infusion (21) destinée à recevoir une capsule contenant une substance alimentaire pour préparer une boisson ;
- une ouverture d'insertion (31) pour insérer la capsule dans l'appareil (1) ;
- un canal de transfert (32) pour la capsule, qui relie l'ouverture d'insertion (31) à la chambre d'infusion (21) ;
- un dispositif d'acquisition d'images (4) destiné, en utilisation, à acquérir au moins une image d'une portion de la capsule, le dispositif d'acquisition d'images (4) comprenant un capteur optique (42) orienté vers une zone de capture d'images (40) dans laquelle, en utilisation, ladite capsule est située ou passe, la zone de capture d'images (40) étant un tronçon du canal de transfert (32) ;
- une fenêtre de vision (45), réalisée dans un matériau transparent, qui est interposée entre le capteur optique (42) et la zone de capture d'images (40), la fenêtre de vision (45) ayant une première face (451) orientée vers le capteur optique (42) et une deuxième face (452) orientée vers la zone de capture d'images (40) ;
- un dispositif chauffant (6, 22) ;
où le dispositif chauffant (6, 22) est positionné dans une première région (11) de l'appareil (1) et la fenêtre de vision (45) est positionnée dans une deuxième région (12) de l'appareil (1), la première région (11) étant à une hauteur qui est plus basse par rapport à la deuxième région (12) ;
où la première région (11) et la deuxième région (12) sont en communication l'une avec l'autre, permettant ainsi un flux d'air de la première région (11) à la deuxième région (12) ;
**caractérisé en ce que** l'appareil (1) est configuré de manière à ce que, en utilisation, le dispositif chauffant (6, 22) chauffe l'air dans la première région (11) et l'air chauffé s'écoule dans la deuxième région (12), où l'air chauffé peut entrer en contact avec la première face (451) et/ou la deuxième face (452) de la fenêtre de vision (45) et chauffer la fenêtre de vision (45).

2. L'appareil (1) pour la préparation d'une boisson selon la revendication 1, dans lequel, en utilisation, une ventilation naturelle qui a lieu en raison d'un effet de cheminée fait s'écouler l'air chauffé de la première région (11) à la deuxième région (12).

3. L'appareil (1) pour la préparation d'une boisson selon la revendication 1 ou 2, dans lequel le dispositif chauffant (6, 22) est ou comprend un réchauffeur (22) pour chauffer l'eau pour la préparation de la boisson.

4. L'appareil (1) pour la préparation d'une boisson selon la revendication 3, dans lequel le réchauffeur (22) comprend une coque extérieure (60) qui est au moins partiellement dans la première région (11) et qui chauffe lors de l'utilisation du réchauffeur (22), de sorte que le dispositif chauffant (6, 22) chauffe l'air dans la première région (11) au moyen d'un échange thermique entre la coque extérieure (60) et l'air.

5. L'appareil (1) pour la préparation d'une boisson selon l'une quelconque des revendications de 1 à 4, dans lequel le dispositif d'acquisition d'images (4) est positionné dans un siège latéral (33) par rapport au canal de transfert (32) et dans lequel la fenêtre de vision (45) est espacée du canal de transfert (32), la fenêtre de vision (45) étant dans une position en recul dans le siège latéral (33),
la deuxième région (12) étant entre la fenêtre de vision (45) et le canal de transfert (32), de sorte que, en utilisation, l'air chauffé peut entrer en contact avec la deuxième face (452) de la fenêtre de vision (45).

6. L'appareil (1) pour la préparation d'une boisson selon l'une quelconque des revendications de 1 à 5, dans lequel la deuxième région (12) est en communication avec le canal de transfert (32) ou dans lequel la deuxième région (12) fait partie du canal de transfert (32), de sorte que, en utilisation, l'air chauffé peut entrer en contact avec la deuxième face (452) de la fenêtre de vision (45) et peut aller dans le canal de transfert (32) jusqu'à ce qu'il sorte à travers l'ouverture d'insertion (31).

7. L'appareil (1) pour la préparation d'une boisson selon l'une quelconque des revendications de 1 à 6, dans lequel le dispositif d'acquisition d'images (4) comprend une enveloppe en forme de boîte (5) qui enferme une chambre intérieure (50) dans laquelle est logé le capteur optique (42), la fenêtre de vision (45) étant une partie de l'enveloppe en forme de boîte (5), où le dispositif chauffant (6, 22) est positionné sous l'enveloppe en forme de boîte (5).

8. L'appareil (1) pour la préparation d'une boisson selon la revendication 7, dans lequel un canal de passage d'air (57) est présent entre une paroi de fond (52) de l'enveloppe en forme de boîte (5) et le dispositif chauffant (6, 22), le canal de passage d'air (57) mettant la première région (11) en communication avec la deuxième région (12), le flux d'air chauffé de la première région (11) à la deuxième région (12) étant dans le canal de passage d'air (57).

9. L'appareil (1) pour la préparation d'une boisson selon la revendication 8 en combinaison avec la revendication 4, dans lequel le canal de passage d'air (57) est formé entre la coque extérieure (60) du réchauffeur (22) et la paroi de fond (52) de l'enveloppe en forme de boîte (5).

10. L'appareil (1) pour la préparation d'une boisson selon l'une quelconque des revendications de 1 à 9, comprenant une chambre de collecte (15) pour capsules utilisées, ladite chambre de collecte (15) étant en dessous de la chambre d'infusion (21) et étant en communication, à travers la chambre d'infusion (21), avec le canal de transfert (32),
l'appareil (1) comprenant au moins une cloison de séparation (18) qui sépare la chambre de collecte (15) de la première région (11),
la première région (11) étant en communication avec l'environnement à l'extérieur de l'appareil (1) par le biais d'au moins une ouverture ou fente (19) dans une coque extérieure (10) de l'appareil (1).
